**Europäisches Patentamt**

**European Patent Office**

**Office européen des brevets**

(19)

(11) **EP 1 679 651 A1**

(12) **EUROPEAN PATENT APPLICATION**

(43) Date of publication:
**12.07.2006 Bulletin 2006/28**

(51) Int Cl.:
*G06Q 40/00* (2006.01)   *H02J 3/00* (2006.01)

(21) Application number: **05100130.3**

(22) Date of filing: **11.01.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | • **Meeus, Leonardo**<br> **3001, LEUVEN-HEVERLEE (BE)**<br>• **Purchala, Konrad**<br> **3001, LEUVEN-HEVERLEE (BE)**<br>• **Belmans, Ronnie**<br> **3001, LEUVEN-HEVERLEE (BE)** |
| (71) Applicant: **Elia System Operator**<br>**1000 Bruxelles (BE)** | (74) Representative: **Quintelier, Claude et al**<br>**Gevers & Vander Haeghen,**<br>**Intellectual Property House,**<br>**Brussels Airport Business Park**<br>**Holidaystraat 5**<br>**1831 Diegem (BE)** |
| (72) Inventors:<br>• **Halain, Philippe**<br> **1000, BRUXELLES (BE)**<br>• **Vandenberghe, Frank**<br> **1000, BRUXELLES (BE)** | |

(54)   **A method for determining within a transport network an energy production and transport pattern.**

(57)    A method for determining within a transport network an energy production and transport pattern. The parties producing and the parties requesting energy within a predetermined period of a predetermined time-frame are inventoried in order to determine for the standard energy producing and requesting parties a merit order and a marginal price.

Once the marginal price is determined for each location the non-standard energy producing and requesting parties are inventoried and those non-standard parties offering or requesting energy at the determined marginal price are further considered. The energy production and transport pattern is then determined by considering the merit order and the non-standard parties.

*Fig. 7*

**Description**

The invention relates to a method for determining within a transport network an energy production and transport pattern, in particular an electrical energy generation and load flow pattern, and wherein said transport network has a predetermined network energy transport capacity and extends over a number of geographical locations, said network comprises energy producing and energy requesting parties each time located at one of said geographical locations, to each of said geographical locations there being attributed a location indicator, to each of said parties there being attributed an identifier identifying the concerned party and comprising the location indicator of the concerned party, said method comprising:

- inventory into a first set those of said energy producing parties which within a predetermined period of a predetermined time frame offer first quantities of said energy and forming for each of them a first dataword comprising their respective identifier as well as their offered first quantities and associated production prices;
- inventory into a second set those of said energy requesting parties which within said predetermined period of said time frame request second quantities of said energy and forming for each of them a second dataword comprising their respective identifier as well as their requested second quantities and associated buying prices;
- forming a third set of production parameters by weighing for each first dataword of said first set its first quantity with its associated production price;
- forming a fourth set of requesting parameters by weighing for each second dataword of said second set its second quantity with its associated buying price;
- determining a merit order and a marginal price for said periods of said time frame by balancing said production and requesting parameters of said third and fourth set towards a maximum net utility of said network energy transport capacity, said merit order resulting in a first and second sub-set of said first and second set and allots at said marginal price to each requesting party of said second subset at least a fraction of the first quantities retained in said first subset;
- determining a preliminary production and transport pattern by attributing according to said merit order for said periods said fractions at said marginal price to said requesting parties of said second sub-set.

Such a method is known from the book "Power systems economics, designing markets for electricity" by S. Stoft and published in IEEE Press, (2002) 497 pp. In a liberalised market, users, which are formed by the energy producing parties as well as by the energy requesting parties i.e. those producing the energy and those consuming the energy, use the same network and a system operator operates and possibly also owns the network. Different users want to receive or transfer energy via the transport network in within certain periods of a certain time frame at certain locations. The system operator has to decide who is allowed to transfer or receive energy via the network within the time frame. For instance, deciding today which energy quantities to accept per hour of the next day.

Known optimisation methods optimise the use of the transport network in consecutive time periods of a certain time frame by maximising the total net utility of using the transport network. In order to determine an optimal energy production and transport pattern within the considered time frame for the transport network, it is necessary to inventory the involved energy quantities between on the one hand the energy producing parties and on the other hand the energy requesting parties. Energy requesting parties request quantities of energy, also called load quantities, for which they are willing to pay an associated buying price but not more. Energy producing parties produce or generate quantities of energy, for which they want to be paid an associated production price and not less. Determining an optimal use of the network signifies deciding which quantities of energy are accepted and at which price. An optimal use is determined by determining a merit order and a marginal price coupled to this merit order. This marginal price is a unique price per location and considered period. It should be noted that different prices could be asked for several periods within the time frame. Standard users offer or request energy in a single period of a plurality of periods within a certain time frame.

It is important that these marginal prices give correct capacity scarcity signals to the users. If network capacity is scarce, users pay extra to allow a network capacity expansion so that the total value that can be created by using the network increases. Users should not pay extra if a network capacity expansion is not necessary. Users do not pay extra for a network capacity expansion in a certain period, if locational prices in that period are equal. This principle is called locational marginal pricing.

For the energy producing parties it is more efficient that their generated energy is made available for a number of consecutive periods, instead of just one period. Also load profiles, such as industrial processes, essentially have a multi period character. Therefore, it is necessary that the energy quantities requested and those produced in different periods can be linked, meaning that they are accepted together or not at all. In what follows, these quantities are called multi period as opposed to the standard single period quantities. Standard quantities are also divisible, what means that it is possible that only a fraction of the produced or requested energy quantity is accepted. However not all energy quantities are technically divisible.

A drawback of the known method is that the mixing of indivisible or multi period energy quantities with single period quantities does not lead to a workable energy production and transport pattern. Indeed the merit order and its associated marginal price can not be adequately determined since inconsistent marginal prices disturb the determination of the merit order and its subsequent generation and load flow pattern.

It is an object of the present invention to provide a method for determining within a transport network an energy production and transport pattern where indivisible and multi period energy quantities can be mixed with divisible single period quantities.

For this purpose a method according to the present invention is characterised in that said method further comprises:

- inventory for each location where an energy producing party of said first sub-set is located and for each location where an energy requesting party of said second sub-set is located, those energy producing parties and requesting parties of the first and second set at the considered location offering at a further price, which is compatible with said marginal price established for the considered location, further energy quantities respectively requesting further energy quantities, which were outside said merit order;
- grouping per location into a fifth set those energy producing parties and requesting parties, which offer respectively request said further quantities;
- classifying into a third sub-set of said fifth set, for each fifth set, those energy producing parties and requesting parties which offer, respectively request, said further energy quantities as an indivisible amount over a number of N ($N \geq 2$) periods within said time frame;
- classifying into a fourth sub-set of said fifth set, for each fifth set, those energy producing parties and requesting parties which offer, respectively request, said further energy quantities as an divisible amount over a number of N ($N \geq 2$) periods within said time frame;
- constructing per location a decision block schema wherein each block comprises a N by 2 matrix, each $(i,1)^{th}$, respectively $(i,2)^{th}$ ($1 \leq i \leq N$) position within said matrix corresponds to an energy requested respectively produced quantity at an $i^{th}$ time period, said decision block schema comprising at least M levels, where M is the number of parties within the third sub-set of the considered location, each $m^{th}$ level ($1 \leq m \leq M$) comprising $2^m$ decision blocks, an m=1 level being formed by a j=1 block where the considered m=1 party being considered as accepted and a j=2 block where the considered m=1 party being considered as rejected, each subsequent $m^{th}$ ($m \neq 1$) level being formed by starting each time from a $j^{th}$ ($1 \leq j \leq 2^{m-1}$) block of the preceding m-1 level and forming a first further block where the considered $m^{th}$ party is considered as accepted and its considered energy is added to the one of the $j^{th}$ block and a second further block where the considered $m^{th}$ party is considered as rejected, said decision block schema being completed by adding at least one subsequent level, each decision block of a subsequent (M+s;s $\geq 1$) level being formed by starting each time from a $j^{th}$ ($1 \leq j \leq 2m-1$) block of the preceding $(M+s-1)^{th}$ level and by adding a fraction q ($0 \leq 1 \leq q$) of the energy of the parties belonging to said fourth sub-set, said decision block being achieved when in at least one of said decision blocks of an $(M+s)^{th}$ level a match between energy producing and requesting parties is obtained, said production and transport pattern being determined by combining said preliminary pattern with a further pattern obtained in one of said decision blocks having lead to said match. When considering each location separately, the marginal price, determined for the considered location on the basis of the merit order, taking into account the divisible single period, can be imposed as the price for the location. Therefore only those energy producing and requesting parties are retained which present a price compatible with the set marginal price for the considered location. The classification into a third and fourth sub-set enables to distinguish the parties offering or requesting a divisible amount from those offering or requesting an indivisible amount. The use of the decision block schema enables to systematically first consider those parties belonging to the third subset and then to complete the schema by the parties belonging to the fourth sub-set. An energy production and transport pattern is thus obtained which enables a higher net utility of the network by giving in a consistent manner more parties access to the determined energy production and transport pattern.

A first preferred embodiment of a method according to the invention is characterised in that in case that in more than one decision blocks of said $(M+s)^{th}$ level said match is obtained, the decision block leading to the highest net utility between energy producing and requesting parties is selected as said further pattern. The highest net utility of the network is thus obtained.

A second preferred embodiment of a method according to the invention is characterised in that upon said balancing of said production and requesting parameters the total accepted quantity within said merit order is brought to a maximum.

A third preferred embodiment of a method according to the invention is characterised in that upon said balancing of said production and requesting parameters the total flow within the transport network is minimised.

The invention will now be described in more details with respect to the drawings illustrating a preferred embodiment of the method according to the invention. In the drawings :

figure 1 illustrates an example of a transport network;
figure 2 illustrates a first example of the determination of a merit order and marginal price for standard users;
figure 3 illustrates a second example of the determination of a merit order and marginal price for standard users;
figure 4 respectively 5 illustrates further examples of the determination of a merit order and marginal price for standard users where the maximum utility respectively the minimum flow is considered;
figures 6 and 7 illustrate how the pattern is determined for non-standard users;

In the drawings a same reference sign has been allotted to a same or analogous element.

In the description given below, the used examples will refer to electrical energy. It will however be clear that the method according to the present invention is not limited to electrical energy and can be applied to other energies which are transported via a network such as for example gas.

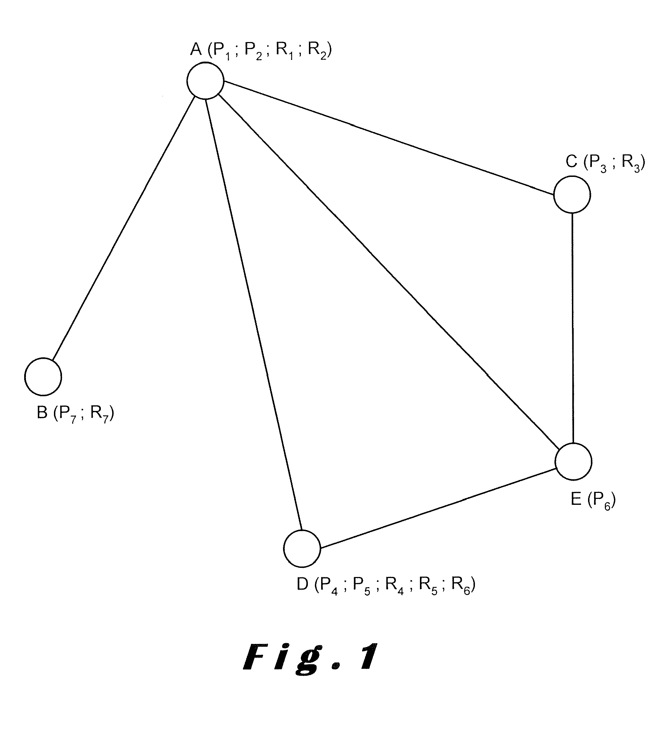

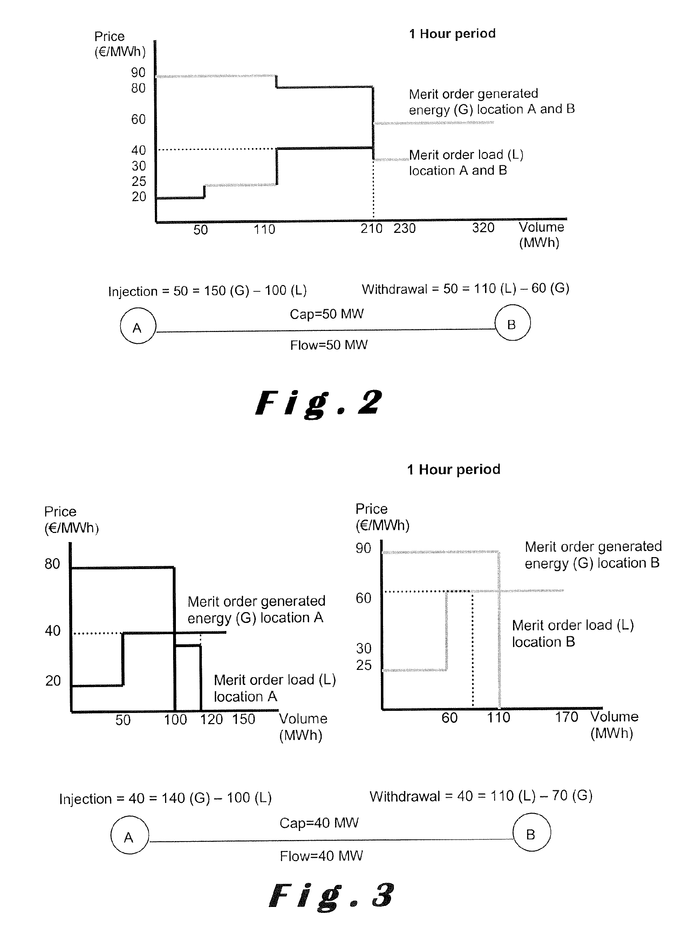

Figure 1 illustrates an example of a transport network wherein the method of the invention could be applied. The transport network extends over a number of geographical locations. In the given example five geographical locations A, B, C, D and E are represented. These locations may correspond to known geographical locations or to a group of known geographical locations. To each geographical location there being attributed a location indicator which is for example formed by the name of the country, the city and the province where the location is situated. Alternatively a codeword could be attributed to each location, which codeword would then form the location indicator.

At the geographical locations there are either energy producing parties (P) or energy requesting parties (R) or both. So, for example at location A there are the energy producing parties P1 and P2 and the energy requesting party R1. The transport network connects the different geographical locations among each other and has a predetermined network energy transport capacity. This capacity determines how much energy can be transported from one geographical location to another. In transporting energy produced for example at location A towards location D, the capacity of the transport network has to be taken into account in order not to overload it. This capacity thus imposes some limitation to the transport.

In the free energy market, there are energy producing parties, which offer energy and energy requesting parties, which want to buy energy. The energy producing parties offer during a predetermined time frame of for example one or more hours, a quantity of energy (MWh for electricity) at an associated price. The latter being generally the minimum price which they want to obtain for the produced energy. The requesting parties require for the considered time frame a quantity of energy at an associated buying price, which is the maximum price they want to pay. The present invention now provides a method which enables to determine an energy production and transport pattern taking into account the offered and requested energy at the associated prices as well as the transport capacity of the network.

For the further description of the method according to the invention, some nomenclature will be used, the significance thereof will be described below.

$H$      Number of periods $h$, within a time frame;

$Z$      Number of geographical locations $Z$;

*Lines*      Number of lines $x - y$ interconnecting two locations:

$$x, y \in Z \,\big|\, x < y$$

$PTDF_{h,z,x-y}^{Z_{ref}}$      Power Transport Distribution Factor: the energy flow on the line interconnecting location $x$ and location $y$, in the direction $x$-$y$, in period $h$, caused by an injection at location $z$, given that $Z_{ref}$ is the reference location.

$CAP_{h,x-y}$      The directional transport capacity on the line interconnecting location $x$ and location $y$ in period $h$, in the direction $x - y$, which can be different from direction $y - x$

$Z_{ref}$      The reference location, i.e. Power Transport Distribution Factors of a transmission network can be calculated from the line parameters based on the assumptions of DC load flow by taking one location as the reference location. Which location is taken as the reference location has no further impact on the results.

*Standard users: divisible single period quantities*

By standard users is meant those energy producing or requesting parties, which produce or request energy within a time frame constituted by a single period. A divisible energy quantity signifies that either the whole quantity is considered or only a fraction thereof.

$J, I$      Number of requested energy quantities or loads $j$ and available produced or generated energies $i$, which are divisible and within a single period;

$$P^{L}_{h,z,j} \;,\; L_{h,z,j} \qquad \text{Price and quantity of load } j \text{ requested in period } h \text{ at location } z$$

$$P^{G}_{h,z,i} \;,\; G_{h,z,i} \qquad \text{Price and quantity of load } j \text{ submitted in period } h \text{ at location } z \text{ of generation } i \text{ submitted in period } h$$
at location $z$

*Non standard users: (semi) indivisible or multi period quantities*

By non-standard users is meant those energy producing or requesting parties, which produce or request energy within a time frame constituted by several periods. An indivisible energy quantity signifies that the whole quantity is considered.

$N$ , $M$     Number of requested loads $n$ and available generated energies $m$ , that are (semi) indivisible and/or multi period

$$D_{h,z,n}, P^{D}_{h,z,n} \qquad \text{Price and quantity of load } n \text{ requested in period } h \text{ at location } z$$

$$P^{S}_{h,z,m} \;,\; S_{h,z,m} \qquad \text{Price and quantity of generated energy } m \text{ available in period } h \text{ at location } z$$

<u>Decision variables</u>

$l_{h,z,j}$     Accepted fraction $0 \leq l_{h,z,j} \leq 1$ of requested energy quantity $j$ in period $h$ at location $z$ ;

$g_{h,z,i}$     Accepted fraction $0 \leq g_{h,z,i} \leq 1$ of generated energy quantity $i$ in period $h$ at location $z$

$d_{h,z,n}$     Accepted fraction $0 \leq d_{h,z,n} \leq 1$ of requested energy quantity $n$ in period $h$ at location $Z$. If $n$ is an indivisible quantity, the variable is binary.

$S_{h,z,m}$     Accepted fraction $0 \leq s_{h,z,m} \leq 1$ of generated energy $m$ in period $h$ at location $z$. If $m$ is an indivisible quantity, the variable is binary.

$p_{h,z}$     Price of the last accepted generated quantity in period $h$ at location $Z$

$slack_{h,x\text{-}y}$     Slack of the transmission constraint of the line interconnecting location $x$ and location $y$ in period $h$

In order to illustrate the concept of divisible generated energy within a single period, an example will be described hereunder. 100 MWh ($G_{h,z,i}$) energy is produced by a producing party P1 at location A and made available at an associated production price of 50€/MWh ( $P^{G}_{h,z,i}$ ). The energy can be delivered tomorrow during hour $h$, under the condition that the accepted fraction ($g_{h,z,i}$) is between 0 and 1 ($0 \leq g_{h,z,i} \leq 1$) and that the generated energy is paid enough, meaning that the associated production price ($p_{h,z}$) for period $h$ has to be at least 50€/MWh ( $P^{G}_{h,z,i} \leq p_{h,z}$ ). The fact that only a fraction ($0 \leq g_{h,z,i} \leq 1$) could be accepted renders the produced energy quantity divisible.

In order to illustrate the concept of semi-indivisible generated energy within a single period, an example will be described hereunder. 100 MWh ($S_{h,z,m}$) energy is produced by a producing party P4 at location D and made available at an associated production price 50€/MWh ( $P^{S}_{h,z,m}$ ). The energy can be delivered tomorrow during hour $h$ , under the condition at least 25MWh or nothing is accepted ($1/4 < s_{h,z,m}$) and that the generated energy is paid enough, meaning that the associated production price ($P_{h,z}$) for period $h$ has to be at least 50€/MWh ( $P^{G}_{h,z,i} \leq p_{h,z}$ ). The fact that only a fraction ($1/4 < s_{h,z,m}$) could be accepted renders the produced energy quantity semi-indivisible.

In order to illustrate the concept of indivisible generated energy within multi periods, an example will be described hereunder. 600 MWh ($S_{h,z,m}$) energy is produced by a producing party P3 at location C and made available at an associated production price 10€/MWh ($P^S_{h,z,m}$). The energy can be delivered tomorrow during period $h$ and 400 MWh ($S_{h+1,z,m}$) is made available at price 20€/MWh ($P^S_{h+1,z,m}$) at location C, for delivery tomorrow during period $h+1$, under the condition that the accepted fractions are equal and binary ($S_{h,z,m} = S_{h+1,z,m} = 0/1$) and that the generated energy is paid enough, signifying that the volume weighted associated production price of the two periods has to be at least 14€/MWh

$$\left( \frac{P^S_{h,z,m} * S_{h,z,m} + P^S_{h+1,z,m} * S_{h+1,z,m}}{S_{h,z,m} + S_{h+1,z,m}} \leq \frac{p_{h,z} * S_{h,z,m} + p_{h+1,z} * S_{h+1,z,m}}{S_{h,z,m} + S_{h+1,z,m}} \right).$$

Finally for an divisible multi period generated energy, the accepted fractions have to be equal, as in the preceding example, but between 0 and 1, instead of 0 or 1 ($0 \leq s_{h,z,m} = s_{h+1,z,m} \leq 1$).

Determining an energy production and transport pattern within the network, means deciding which quantities are accepted and at which price. The marginal price is the price as determined upon determination of the merit order. If on the one hand there is enough network capacity in a certain period of a certain time frame, the net utility created by using the network is at its maximum and all marginal prices are equal for each considered location because the marginal accepted generated energy is the same for all locations. Indeed if the network capacity is enough, the energy can be transported over the network from one location to the other and all involved locations can benefit from the offered energy. If on the other hand there is not enough network capacity in a certain period of a certain time frame, the net utility is less because somewhere in the network more expensive, but locally available generated energy, has to be used instead of the cheaper but non-local alternative. In both cases net utility of using the network is maximized given the available network capacity. Net utility is the value of the energy for load or requested energy quantities minus the cost for producing the energy. Maximizing net utility basically means matching cheapest produced quantities with most willing to pay requested quantities as long as the resulting flow through the network stays within the limits of the network capacity.

The determination of a merit order wherein the net utility is maximized and local marginal price is determined, will be clarified with the following example:

Table 1

| Location A | | Location B | |
|---|---|---|---|
| $L_{h,z=A,j}$ | $P^L_{h,z=A,j}$ | $L_{h,z=B,j}$ | $P^L_{h,z=B,j}$ |
| 100MWh @ 80€/MWh | | 110MWh @ 90€/MWh | |
| 20MWh @ 30€/MWh | | | |
| $G_{h,z=A,i}$ | $P^G_{h,z=A,i}$ | $G_{h,z=B,i}$ | $P^G_{h,z=B,i}$ |
| 50MWh @ 20€/MWh | | 60MWh @ 25€/MWh | |
| 100MWh @ 40€/MWh | | 110MWh @ 60€/MWh | |

In table 1, two locations A and B are considered as well as a one hour period within a certain time frame. At location A, 100 MWh energy is requested at a buying price of 80€/MWh by party R1 and 20 MWh energy at a buying price 30€/MWh by party R2. At location B, 110 MWh energy is requested at price 90€/MWh by party R7. At location A, 50 MWh energy is produced by party P1 at a production price of 20€/MWh and 100 MWh at price 40€/MWh by party P2. At location B 60MWh is produced at price 25€/MWh and 110 MWh at price 60€/MWh by party P7.

In order to determine the merit order it is necessary to inventory into a first set those of said energy producing parties which within the period offer first quantities of said energy. In the example of table 1 those are at location A, the 50 MWh energy at a production price of 20€/MWh and 100 MWh at price 40€/MWh, and at location B, the 60MWh at price 25€/MWh and 110 MWh at price 60€/MWh. For each of the producing parties a first dataword is formed, comprising their respective identifier (location A, B; P1, P2, P7), as well as their offered first quantities and associated production prices. Moreover, into a second set those of said energy requesting parties (R1, R2 and R7), which within said predetermined time frame request second quantities of said energy are inventoried. For each of them a second dataword comprising their respective identifier (location A, B; R1, R2, R7), as well as their requested second quantities and associated buying prices is formed.

Figure 2 shows the merit order in which requested energy quantities and produced energy quantities are matched. To this purpose a third set of production parameters is formed by weighing for each first dataword of said first set its first quantity with its associated production price. In figure 2 the quantity of energy is represented as a function of the price. So the 50 MWh energy at location A with its 20€/MWh forms the first production parameter of the third set as its production price is the lowest. The second production parameter of the third set is formed by the 60 MWh of location B at a price of 25€/MWh, as it is the energy at the second lowest price. The third production parameter of the third set is formed by the 100 MWh of location A at a price of 40€/MWh, as it is the energy at the subsequent lowest price. Finally the fourth production parameter of the third set is formed by the 110 MWh of location B at a price of 60€/MWh, as it is the energy with the highest production price.

Also a fourth set of requesting parameters is formed by weighing for each second dataword of said second set its second quantity with its associated buying price. Figure 2 shows this fourth set too. So the 110 MWh energy at location B with its 90€/MWh forms the first production parameter of the fourth set as its production price is the highest. The second production parameter of the fourth set is formed by the 100 MWh of location A at a price of 80€/MWh, as it is the energy at the second highest price. Finally the third production parameter of the fourth set is formed by the 20 MWh of location A at a price of 30€/MWh, as it is the energy with the lowest buying price.

The merit order for the considered period of a certain time frame is now determined by balancing the production and requesting parameters of said third and fourth set towards a maximum net utility of said network energy transport capacity. As can be seen from figure 2, this balance is obtained at 210 MWh at a marginal price of 40€/MWh, i.e. the point where the production and requesting parameters of said third and fourth set are in balance with each other. The 20 MWh load requested at location A at price 30€/MWh is out of merit, because the price of 30€/MWh is below the marginal price of 40€/MWh. Thus the merit order results in a first and second sub-set of said first and second set and allots at said marginal price to each requesting party of said second subset at least a fraction of the first quantities retained in said first subset. In the present example the merit order comprises 210 MWh energy of which 100 MWh is supplied at location A and 110 MWh at location B (second sub-set). This energy is generated at cheapest, by generating during one hour 150 MW at location A and 60 MW at location B (first sub-set). This means that during that hour 50 MW is injected in the network at location A and 50 MW is withdrawn from the network at location B. The flow caused by this load generation pattern is 50 MW on the line interconnecting location A and B.

If the available line capacity is 50 MW (Figure 2), this is the solution because net utility of using the network is at its maximum 11.400€ = (110MWh*90€/MWh + 100MWh*80€/MWh - 50MWh*20€/MWh - 60MWh*25€/MWh - 100MWh*40€/MWh). Both locations have an equal marginal price of 40€/MWh, meaning that what is paid to generators equals what load pays (210MWh*40€/MWh - 210MWh*40€/MWh = 0).

If the available network capacity is less than 50 MW, for instance 40 MW (Figure 3), net utility of using the network is less and marginal prices are different, because the 50 MW cannot be withdrawn from the network at location B. The determined merit order has therefore to be reviewed, because it does not fit with the network capacity. To prevent a line overload, the total amount of 210 MWh load is generated by generating 140 MW at location A, instead of 150 MW during one hour and 70 MW at location B during one hour. This means that during that hour 40 MW is injected in the network at location A and 40 is withdrawn from the network at location B. Because 10 MWh is generated in location B at price 60€/MWh instead of the cheaper alternative, 40€/MWh, in location A, net utility is reduced 200€ (11.400€ - (110MWh*90€/MWh + 100MWh*80€/MWh - 50MWh*20€/MWh - 60MWh*25€/MWh - 90MWh*40€/MWh - 10MWh*60€/MWh)). The marginal prices in location A and B are respectively 40 and 60, meaning that what is paid to generators in location A for export to location B is less than what load pays in location B for import from location A. The difference of 800€ (100MWh*40€/MWh + 110MWh*60€/MWh - 140MWh*40€/MWh - 70MWh*60€/MWh), being what the network users implicitly pay extra for the scarce network capacity. The money users pay extra for a scarce network capacity, can be used for a network expansion, so that the total value, which can be created by using the network increases. In this case the net utility could be increased by 200€.

To determine which energy quantities are accepted according to the principles described above, an optimization method can be used. The following objective is maximized, with $l_{h,z,j}$ and $g_{h,z,i}$ being the decision variables of the divisible requested energy and produced energy quantities offered in a single period of a certain time frame, which could consist of several periods:

$$\sum_{h=1}^{H}\sum_{z=1}^{Z}\sum_{j=1}^{J}P^{L}_{h,z,j}\cdot L_{h,z,j}\cdot l_{h,z,j} - \sum_{h=1}^{H}\sum_{z=1}^{Z}\sum_{i=1}^{I}P^{G}_{h,z,i}\cdot G_{h,z,i}\cdot g_{h,z,i} \quad (1)$$

Subject to the following constraints:

In every time frame *h*, the total requested and produced energy have to be equal.

$$\forall h: \sum_{z=1}^{Z}\sum_{j=1}^{J}L_{h,z,j}\cdot l_{h,z,j} - \sum_{z=1}^{Z}\sum_{i=1}^{I}G_{h,z,i}\cdot g_{h,z,i} = 0 \quad (2)$$

Based on the assumptions of dc load flow , flow through a meshed electricity network is a linear function of the load generation pattern. On every interconnection between two locations, flow is limited to the available capacity by the following constraints:

$$\forall h,$$
$$\forall x-y\in Lines$$

$$-CAP_{h,z,y-x} \le \sum_{z=1,z\ne Z_{ref}}^{Z}\left(\left(\sum_{i=1}^{I}G_{h,z,i}\cdot g_{h,z,i} - \sum_{j=1}^{J}L_{h,z,j}\cdot l_{h,z,j}\right)\cdot PTDF_{h,z,x-y}^{Z_{ref}}\right) \le CAP_{h,z,x-y} \quad (3)$$

Based on the principles of contract path, flow through a radial network or non meshed network can be simplified even further. Given such a network, the difference between load and generation is limited by the following constraints:

$$\forall h, \forall z$$

$$\sum_{y=1}^{Z}CAP_{h,y-z} \le \left(\sum_{i=1}^{I}\left(G_{h,z,i}*g_{h,z,i}\right) - \sum_{j=1}^{J}\left(L_{h,z,j}*l_{h,z,j}\right)\right) \le \sum_{y=1}^{Z}CAP_{h,z-y} \quad (4)$$

The invention enables more than maximizing net utility. Sometimes there are different solutions, which maximize net utility. In this case, the presented approach selects the solution that maximizes total accepted quantity. And if there are different solutions with a net utility and total accepted quantity equal to the maximum, the solution with minimum flow through the limited capacity network is selected.

Maximizing the total accepted quantity can be clarified with the following illustration:

Table 2

| Location A | | Location B | |
|---|---|---|---|
| $L_{h,z=A,j}$ | $P^{L}_{h,z=A,j}$ | $L_{h,z=B,j}$ | $P^{L}_{h,z=B,j}$ |

Table continued

| Location A | | Location B | |
|---|---|---|---|
| 120MWh @ 40€/MWh | | 80MWh @ 80€/MWh | |
| $G_{h,z=A,i}$ | $P^G_{h,z=A,i}$ | $G_{h,z=B,i}$ | $P^G_{h,z=B,i}$ |
| 50MWh @ 20€/MWh | | 60MWh @ 25€/MWh | |
| 50MWh @ 55€/MWh | | 40MWh @ 40€/MWh | |

Two locations A and B with a one hour period of a certain time frame in which 120 MWh load is requested at location A at price 40€/MWh and 80 MWh load is requested at location B at price 80€/MWh. 50 MWh generated energy is available at location A at price 20€/MWh and 50 MWh at price 55€/MWh, and 60MWh is available at location B at price 25€/MWh and 40 MWh at price 40€/MWh.

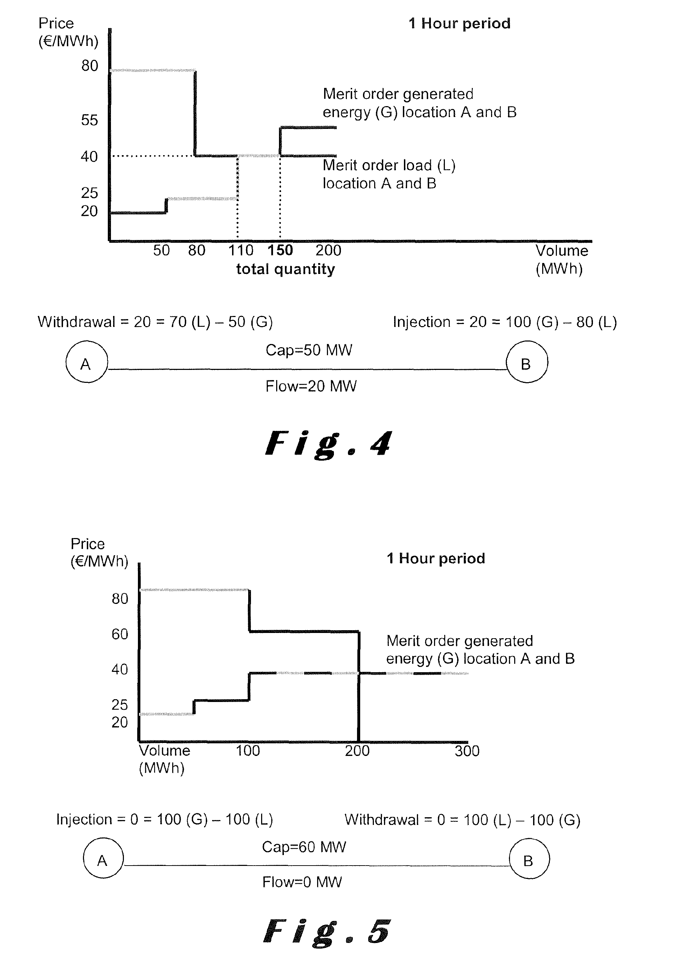

Figure 4 shows the merit order, which is determined in an analogous manner as described with reference to figure 2. The merit order comprise 150 MWh load, 70 MWh at location A and 80 MWh at location B. This is generated cheapest by generating 50 MW at location A during one hour and 100 MW at location B during one hour, meaning that during that hour 20 MW is injected in the network at location B and 20 MW is withdrawn from the network at location A. The flow caused by this energy production and transport pattern is 20 MW on the line interconnecting location A and B, which is lower than the capacity. This solution maximizes net utility of using the network, 2350€ (80MWh*80€/MWh + 70MWh*40€/MWh - 50MWh*20€/MWh - 60MWh*25€/MWh - 40MWh*40€/MWh), and total accepted quantity, 150 MWh.

Alternative solutions with equal net utility but lower total accepted quantity, between 110 MWh and 150 MWh, maximize net utility, but do not maximize total quantity. For instance a solution with total accepted quantity 120 MWh is 120 MWh load, 40 MWh at location A and 80 MWh at location B, is generated by generating 70 MW at location A during one hour and 50 MW at location B during one hour, meaning that during that hour 30 MW is injected in the network at location A and 30 MW is withdrawn from the network at location B. The flow caused by this load generation pattern is 30 MW on the line interconnecting location A and B, which is lower than the capacity. This solution has the maximum net utility 2350€ (80MWh*80€/MWh + 70MWh*40€/MWh - 50MWh*20€/MWh - 60MWh*25€/MWh - 10MWh*40€/MWh).

Maximizing quantity is achieved by shifting generation prices $P^G_{h,z,i}$ down a fraction of the minimum allowed price step. Generation quantities that were priced equally to load become a fraction cheaper, while they remain more expensive than loads that were less willing to pay. Therefore, the only remaining solution that maximizes net utility (equation 1) is feasible and also maximizes total accepted quantity.

It should be noted that the solution, which maximizes the total accepted quantity is not necessarily the solution, which minimizes flow, but if there are different solutions with equal net utility and total accepted quantity, the solution with minimum flow is chosen.

Minimizing the flow can be clarified with the following illustration:

Table 3

| Location A | | Location B | |
|---|---|---|---|
| $L_{h,z=A,j}$ | $P^L_{h,z=A,j}$ | $L_{h,z=B,j}$ | $P^L_{h,z=B,j}$ |
| 100MWh @ 60€/MWh | | 100MWh @ 80€/MWh | |
| $G_{h,z=A,i}$ | $P^G_{h,z=A,i}$ | $G_{h,z=B,i}$ | $P^G_{h,z=B,i}$ |
| 50MWh @ 25€/MWh | | 50MWh @ 20€/MWh | |
| 100MWh @ 40€/MWh | | 100MWh @ 40€/MWh | |

Two locations A and B with a one hour period of a certain time frame in which 100 MWh load is requested at location A at price 60€/MWh and 100 MWh load is requested at location B at price 80€/MWh, while 50 MWh generated

9

energy is available at location A at price 25€/MWh and 100 MWh at price 40€/MWh, and 50MWh is available at location B at price 20€/MWh and 100 MWh at price 40€/MWh.

Figure 5 shows the merit order. 200 MWh load, 100 MWh at location A and 100 MWh at location B, is generated cheapest by generating 100 MW at location A during one hour and 100 MW at location B during one hour, meaning that during that hour 0 MW is injected in the network at location A and 0 MW is withdrawn from the network at location B. The flow caused by this load generation pattern is 0 MW on the line interconnecting location A and B. This solution maximizes net utility of using the network, 7750€ (100MWh*80€/MWh + 100MWh*60€/MWh - 50MWh*20€/MWh - 50MWh*25€/MWh - 100MWh*40€/MWh), and total accepted quantity, 200 MWh, and minimizes flow.

Alternative solutions with equal net utility and total accepted quantity, but more flow, between -50 MWh and +50, are possible. For instance -50 flow means 200 MWh load, 100 MWh at location A and 100 MWh at location B, is generated by generating 50 MW at location A during one hour and 150 MW at location B during one hour, meaning that during that hour 50 MW is withdrawn from the network at location A and 50 MW is injected in the network at location B. The flow caused by this load generation pattern is -50 MW on the line interconnecting location A and B, which is lower than the capacity. This solution has the maximum net utility 7750€ (100MWh*80€/MWh + 100MWh*60€/MWh - 50MWh*20€/MWh - 50MWh*25€/MWh - 100MWh*40€/MWh) and total accepted quantity 200 MWh, but a flow of - 50 MW during one hour.

Minimizing flow is achieved by running a second optimization, using the information achieved in the first optimization. The following objective is maximized, with $slack_{h,x-y}$ the slacks of equations 7:

$$\sum_{h=1}^{H} \sum_{x-y=1}^{Lines} (slack_{h,x-y}) \quad (5)$$

Subject to the following constraints:

Equation 2 of the first optimization, and the following network constraints:

$$\forall h,$$

$$\forall x-y \in Lines$$

$$\sum_{z=1,z\neq Z_{ref}}^{Z} \left( \left( \sum_{i=1}^{I} G_{h,z,i} \cdot g_{h,z,i} - \sum_{j=1}^{J} L_{h,z,j} \cdot l_{h,z,j} \right) \cdot PTDF_{h,z,x-y}^{Z_{ref}} \right) + slack_{h,x-y} \leq CAP_{h,z,x-y}$$

$$- \sum_{z=1,z\neq Z_{ref}}^{Z} \left( \left( \sum_{i=1}^{I} G_{h,z,i} \cdot g_{h,z,i} - \sum_{j=1}^{J} L_{h,z,j} \cdot l_{h,z,j} \right) \cdot PTDF_{h,z,x-y}^{Z_{ref}} \right) + slack_{h,x-y} \leq CAP_{h,z,y-x}$$

$$(6)$$

The flow is minimized, by maximizing the slacks $slack_{h,x-y}$ of equations 7. In order to have a solution that minimizes flow but does not decrease the maximum net utility and total accepted quantity that was reached in the first optimization *MaxNetUtility*, the following constraint has to be added:

$$MaxNetUtility \leq \sum_{h=1}^{H}\sum_{z=1}^{Z}\sum_{j=1}^{J}\left(P^{L}_{h,z,j} * L_{h,z,j} * l_{h,z,j}\right) - \sum_{h=1}^{H}\sum_{z=1}^{Z}\sum_{i=1}^{I}\left(P^{G}_{h,z,i} * G_{h,z,i} * g_{h,z,i}\right)$$

(7)

Once the accepted fractions are known, the marginal prices, $p_{h,z}$, are the prices such as determined with the merit order for the considered period of a certain time frame at a certain location. It is important that these marginal prices give correct capacity scarcity signals to the users. If network capacity is scarce, users pay extra to allow a network capacity expansion. So, that the total value, which can be created by using the network, increases. Users should not pay extra if a network capacity expansion is not necessary.

What users pay extra for scarce network capacity is the following:

$$\sum_{h=1}^{H}\sum_{z=1}^{Z}\left(\left(\sum_{j=1}^{J}\left(L_{h,z,j} * l_{h,z,j}\right) - \sum_{i=1}^{I}\left(G_{h,z,i} * g_{h,z,i}\right)\right) * p_{h,z}\right)$$

(8)

From equations 2 and 5 follows that users do not pay extra for a network capacity expansion in a certain time frame, if marginal prices in that time frame are equal. Consistent pricing therefore means that if network capacity is not scarce in a certain time frame, marginal prices should be equal in that time frame.

In the embodiment described here before, only standard parties operating within single period of a certain time frame with divisible energy quantities were considered. The transport network however also comprises non-standard parties, which offer or request energy during multiple time periods of a time frame. Those non-standard parties offer or request as well divisible as indivisible energy quantities within these multiple time periods. Mixing indivisible or multi period quantities with divisible single time frame quantities in the above determination of the merit order, would lead to inconsistent marginal prices. The method according to the invention therefore offers a solution for matching indivisible and multi period quantities with divisible single time frame quantities. This matching has however to be done per location, meaning that these quantities cannot be exchanged between locations over the network and that these quantities do not influence prices.

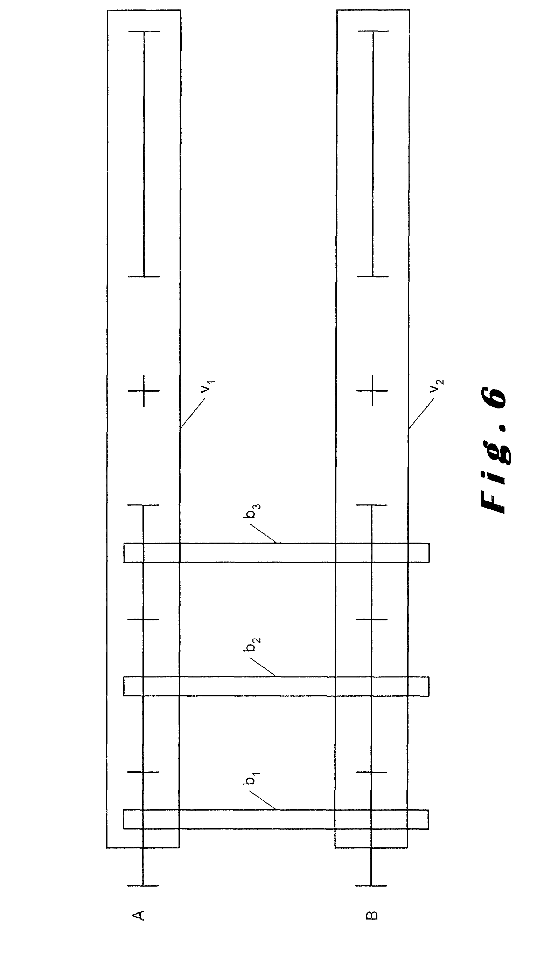

The present invention offers a solution for determining the energy production and transport pattern wherein the already determined merit order is further developed by including the non-standard parties. Once the merit order has been determined, taking into account the standard parties of the first and second set, the marginal price for each involved location and period has been determined. This signifies that for each of those geographical location involved in the merit order, i.e. for each location where an energy producing party of said first sub-set is located and for each location where an energy requesting party of said second sub-set is located, the marginal price is fixed. For each of those considered location, those energy producing parties and requesting parties of the first and second set, which were outside said merit order and which offer, respectively request, further energy quantities at a further price, which is compatible with said marginal price established for the considered location, can be inventoried. This concept is illustrated in figure 6, where two locations A and B are considered in a two period time frame. As illustrated the vertical beam b1, b2, b3 illustrates that the merit order extends over more than one location but only one period. The vertical beams v1 and v2 illustrates that now only a single location is considered but the whole time frame when non-standard users are involved. This concept will further be clarified with the example of table 3 given hereunder. Starting from table 1, where the marginal price was fixed at 40€/MWh for a certain period of a certain time frame, all those energy producing parties offering energy at a price of at the most 40€/MWh are involved, as well as all those energy requesting parties buying energy at a price of at least 40€/MWh.

Table 4

| MWh@€/M Wh | Time Period 1 | | Time Period 2 | |
|---|---|---|---|---|
| Party | Load | Generation | Load | Generation |
| | $D_{h=1,z=A,j}$ @ $P^D_{h=1,z=A,j}$ | $S_{h=1,z=A,j}$ @ $P^S_{h=1,z=A,j}$ | $D_{h=2,z=A,j}$ @ $P^D_{h=2,z=A,j}$ | $S_{h=2,z=A,j}$ @ $P^S_{h=2,z=A,j}$ |
| 1 indivisible | 60@80 | | 60@80 | |
| 2 indivisible | 160@60 | | 160@60 | |
| 3 indivisible | | 80@30 | | 80@30 |
| 4 divisible | | 100@40 | | 100@40 |

Given that there is a time frame of two periods and that the marginal price in both periods equals the established marginal price, all non-standard parties will be considered, because generation is paid enough and load does not have to pay more than the marginal price they want to pay. In the example all non-standard parties request multi period quantities, and for parties1 to 3 these quantities are also indivisible.

An optimization method will be used to determine the accepted fractions of the quantities, which will be accepted of non-standard parties, maximizing net utility for non-standard users and increasing total net utility of using the network. Once the non-standard parties outside the merit order have been inventoried, those energy producing and requesting parties, which offer, respectively request, said further quantities, are grouped per location into a fifth set. In the considered example all the parties 1 to 4 are grouped into this fifth set. Thereafter, for each fifth set, those energy producing parties and requesting parties which offer, respectively request, said further energy quantities as an indivisible amount over a number of N (N≥2) periods within said time frame are classified into a third sub-set of said fifth set. Consequently the third sub-set is formed by the parties 1, 2 and 3. Those energy producing parties and requesting parties which offer, respectively request, said further energy quantities as an divisible amount over a number of N (N≥2) periods within said time frame are classified into a fourth sub-set of said fifth set. The fourth sub-set is thus formed by the party 4.

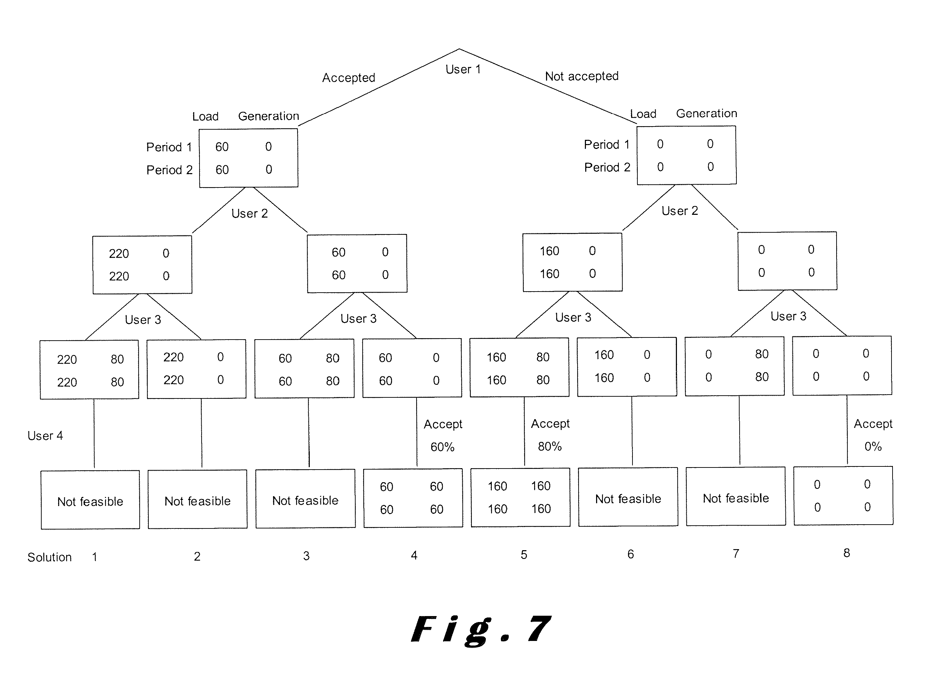

After classification of the non-standard parties a decision block schema is constructed per location as is illustrated in figure 7. Each block of this decision block schema comprises a N by 2 matrix, each $(i,1)^{th}$, respectively $(i,2)^{th}$ $(1 \le i \le N)$ position within said matrix corresponds to an energy requested respectively produced quantity at an $i^{th}$ time period. In the example of figure 7 and table 4, the upper left matrix comprises for the periods 1 and 2 (rows of the matrix) the energy amounts of 60 MWh request by the party 1 (first column). As party 1 is not an energy producing party, the second column comprises '0'. The decision block schema comprising at least M levels, where M is the number of parties within the third sub-set of the considered location. As for the present example M=3, there are at least three levels in the decision block schema.

Each $m^{th}$ level $(1 \le m \le M)$ of the decision block schema comprises $2^m$ decision blocks, an m=1 level being formed by a j=1 block where the considered m=1 party being considered as accepted and a j=2 block, where the considered m=1 party being considered as rejected. In the example of figure 7 the m=1 level comprises the j=1 block (left) where party 1 is accepted and the j=2 block (right) comprising all zero's, because party 1 is considered as not accepted. Each subsequent $m^{th}$ (m ≠1) level being formed by starting each time from a $j^{th}$ $(1 \le j \le 2^{m-1})$ block of the preceding m-1 level and forming a first further block where the considered $m^{th}$ party is considered as accepted and its considered energy is added to the one of the $j^{th}$ block and a second further block where the considered $m^{th}$ party is considered as rejected. In the example of figure 7 and table 4, the amount of possible levels is $2^3$ because there are M=3 parties with indivisible quantities. The utmost left block (j=1) on the second level (m=2) is formed by adding the 160 MWh of requesting party 2 to the 60 MWh of requesting party 1, thus leading to a total of 220 MWh. The j=2 block of the m=2 level is obtained by adding 0 (rejection of party 2) to the 60 MWh of party 1.

Said decision block schema being completed by adding at least one subsequent level, each decision block of a subsequent (M+s; s ≥1) level being formed by starting each time from a $j^{th}$ $(1 \le j \le 2^{m-1})$ block of the preceding (M+s-1)$^{th}$ level and by adding a fraction q $(0 \le 1 \le q)$ of the energy of the parties belonging to said fourth sub-set. In the example of figure 7 and table 4, s=1 as there is only one party (party 4), which produces and offers energy in divisible quantities. Said decision block being achieved when in at least one of said decision blocks of an (M+s)$^{th}$ level a match between energy producing and requesting parties is obtained, said production and transport pattern being determined by combining said preliminary pattern with a further pattern obtained in one of said decision blocks having lead to said match.

For the quantities of the M+S level (3+1 =4), there can only be only two possible decisions, being accepting them completely or not at all. The divisible quantity of party 4 consequently can be used to match generation and load. Combinations 1, 2 and 6 are not feasible because there is not enough generated energy, which has been made available by user 4. Indeed by adding the 100MWh of party 4 to the 80MWh of the j=1 block of level 3, only a quantity of 180MWh is obtained, which is not enough for the requested 220MWh. Combinations leading to the blocks j=3 and j=7 block of level 4, are not feasible because load is needed to match generation with load and user 4 does not request load. Combinations leading to the j=4 and j=5 blocks can be made feasible because by accepting a fraction between 0 and 1 of the generated energy made available by party 4, load and generation are equal in every period. It should be noted that j=8, rejecting all non-standard parties, is always feasible.

Accepting block j=4 means accepting party 1 completely, 60% of party 4 and rejecting party 2 and 3, implying a net utility for non-standard parties of 4800€ (2*60MWh*80€/MWh - 0.60*2*100MWh*40€/MWh). Accepting block j=5 means accepting party 2 and 3 completely, 80% of party 4, and rejecting party 1, implying a net utility for non standard parties of 6320€ (2*160MWh*60€/MWh - 2*80MWh*30€/MWh - 0.80*2*100MWh*40€/MWh).

Therefore the presented approach accepts block j=4. This is done by maximizing the following objective, with $d_{h,z,n}$ and $s_{h,z,m}$ the decision variables of the indivisible and/or multi period load and generation quantities:

$$\sum_{h=1}^{H}\sum_{n=1}^{N}\left(P^D_{h,z,n} * D_{h,z,n} * d_{h,z,n}\right) - \sum_{h=1}^{H}\sum_{m=1}^{M}\left(P^S_{h,z,m} * S_{h,z,m} * s_{h,z,m}\right) \tag{9}$$

Subject to the following constraints:

In every period *h*, load and generation have to be balanced:

$$\forall h: \sum_{n=1}^{N}\left(D_{h,z,n} * d_{h,z,n}\right) - \sum_{m=1}^{M}\left(S_{h,z,m} * s_{h,z,m}\right) = 0$$

$$(10)$$

It should be noted that

- The not selected in the initial price based selection quantities require a decision variable that is equal to 0.
- The indivisible quantities require a binary decision variable.
- The semi indivisible load and generation quantities require a minimum accepted fraction condition, as in illustration 2.
- The multi period quantities require an equality of the accepted fractions in different periods of the same location, but this equality can be substituted in the model by using one decision variable per multi period quantity.

**Claims**

1. A method for determining within a transport network an energy production and transport pattern, in particular an electrical energy generation and load flow pattern, and wherein said transport network has a predetermined network energy transport capacity and extends over a number of geographical locations, said network comprises energy producing and energy requesting parties each time located at one of said geographical locations, to each of said geographical locations there being attributed a location indicator, to each of said parties there being attributed an identifier identifying the concerned party and comprising the location indicator of the concerned party, said method comprising:

 - inventory into a first set those of said energy producing parties which within a predetermined period of a predetermined time frame offer first quantities of said energy and forming for each of them a first dataword comprising their respective identifier as well as their offered first quantities and associated production prices;

- inventory into a second set those of said energy requesting parties which within said predetermined periods of a predetermined time frame request second quantities of said energy and forming for each of them a second dataword comprising their respective identifier as well as their requested second quantities and associated buying prices;

- forming a third set of production parameters by weighing for each first dataword of said first set its first quantity with its associated production price;

- forming a fourth set of requesting parameters by weighing for each second dataword of said second set its second quantity with its associated buying price;

- determining a merit order and a marginal price for said periods of said time frame by balancing said production and requesting parameters of said third and fourth set towards a maximum net utility of said network energy transport capacity, said merit order resulting in a first and second sub-set of said first and second set and allots at said marginal price to each requesting party of said second subset at least a fraction of the first quantities retained in said first subset;

- determining a preliminary production and transport pattern by attributing according to said merit order for said time frame said fractions at said marginal price to said requesting parties of said second sub-set;

**characterised in that** said method further comprises:

- inventory for each location where an energy producing party of said first sub-set is located and for each location where an energy requesting party of said second sub-set is located, those energy producing parties and requesting parties of the first and second set at the considered location offering at a further price, which is compatible with said marginal price established for the considered location, further energy quantities respectively requesting further energy quantities, which were outside said merit order;

- grouping per location into a fifth set those energy producing parties and requesting parties, which offer respectively request said further quantities;

- classifying into a third sub-set of said fifth set, for each fifth set, those energy producing parties and requesting parties which offer, respectively request, said further energy quantities as an indivisible amount over a number of N ($N \geq 2$) periods within said time frame;

- classifying into a fourth sub-set of said fifth set, for each fifth set, those energy producing parties and requesting parties which offer, respectively request, said further energy quantities as an divisible amount over a number of N ($N \geq 2$) periods within said time frame;

- constructing per location a decision block schema wherein each block comprises a N by 2 matrix, each $(i,1)^{th}$, respectively $(i,2)^{th}$ ($1 \leq i \leq N$) position within said matrix corresponds to an energy requested respectively produced quantity at an $i^{th}$ time period, said decision block schema comprising at least M levels, where M is the number of parties within the third sub-set of the considered location, each $m^{th}$ level ($1 \leq m \leq M$) comprising $2^m$ decision blocks, an m=1 level being formed by a j=1 block where the considered m=1 party being considered as accepted and a j=2 block where the considered m=1 party being considered as rejected, each subsequent $m^{th}$ ($m \neq 1$) level being formed by starting each time from a $j^{th}$ ($1 \leq j \leq 2^{m-1}$) block of the preceding m-1 level and forming a first further block where the considered $m^{th}$ party is considered as accepted and its considered energy is added to the one of the $j^{th}$ block and a second further block where the considered $m^{th}$ party is considered as rejected, said decision block schema being completed by adding at least one subsequent level, each decision block of a subsequent (M+s;s $\geq 1$) level being formed by starting each time from a $j^{th}$ ($1 \leq j \leq 2m-1$) block of the preceding $(M+s-1)^{th}$ level and by adding a fraction q ($0 \leq 1 \leq q$) of the energy of the parties belonging to said fourth sub-set, said decision block being achieved when in at least one of said decision blocks of an $(M+s)^{th}$ level a match between energy producing and requesting parties is obtained, said production and transport pattern being determined by combining said preliminary pattern with a further pattern obtained in one of said decision blocks having lead to said match.

2. A method as claimed in claim 1, **characterised in that** in case that in more than one decision blocks of said $(M+s)^{th}$ level said match is obtained, the decision block leading to the highest net utility between energy producing and requesting parties is selected as said further pattern.

3. A method as claimed in claim 1 or 2, **characterised in that** the quantity of requested or generated energy for said fifth set is equal in each of said N time periods.

4. A method as claimed in anyone of the claim 1 to 3,

**characterised in that** upon said balancing of said production and requesting parameters the total accepted quantity within said merit order is brought to a maximum.

5. A method as claimed in claim 4, **characterised in that** said associated production prices are shifted down a fraction with respect to the value present in said first set.

6. A method as claimed in anyone of the claim 1 to 4,
   **characterised in that** upon said balancing of said production and requesting parameters the total flow within the transport network is minimised.

7. A method for determining within a transport network an energy production and transport pattern, in particular an electrical energy generation and load flow pattern, and wherein said transport network has a predetermined network energy transport capacity and extends over a number of geographical locations, said network comprises energy producing and energy requesting parties each time located at one of said geographical locations, to each of said geographical locations there being attributed a location indicator, to each of said parties there being attributed an identifier identifying the concerned party and comprising the location indicator of the concerned party, said method comprising:

   - inventory into a first set those of said energy producing parties which within a predetermined period of a predetermined time frame offer first quantities of said energy and forming for each of them a first dataword comprising their respective identifier as well as their offered first quantities and associated production prices;
   - inventory into a second set those of said energy requesting parties which within said predetermined periods of a predetermined time frame request second quantities of said energy and forming for each of them a second dataword comprising their respective identifier as well as their requested second quantities and associated buying prices;
   - forming a third set of production parameters by weighing for each first dataword of said first set its first quantity with its associated production price;
   - forming a fourth set of requesting parameters by weighing for each second dataword of said second set its second quantity with its associated buying price;
   - determining a merit order and a marginal price for said periods of said time frame by balancing said production and requesting parameters of said third and fourth set towards a maximum net utility of said network energy transport capacity, said merit order resulting in a first and second sub-set of said first and second set and allots at said marginal price to each requesting party of said second subset at least a fraction of the first quantities retained in said first subset;
   - determining a preliminary production and transport pattern by attributing according to said merit order for said time frame said fractions at said marginal price to said requesting parties of said second sub-set;

   **characterised in that** upon said balancing of said production and requesting parameters the total accepted quantity within said merit order is brought to a maximum.

8. A method as claimed in claim 7, **characterised in that** upon said balancing of said production and requesting parameters the total flow within the transport network is minimised.

A $(P_1 ; P_2 ; R_1 ; R_2)$

C $(P_3 ; R_3)$

B $(P_7 ; R_7)$

E $(P_6)$

D $(P_4 ; P_5 ; R_4 ; R_5 ; R_6)$

# Fig.1

EP 1 679 651 A1

**1 Hour period**

Merit order generated
energy (G) location A and B

Merit order load (L)
location A and B

Injection = 50 = 150 (G) − 100 (L)     Withdrawal = 50 = 110 (L) − 60 (G)

Cap=50 MW

Flow=50 MW

# F i g . 2

**1 Hour period**

Merit order generated
energy (G) location A

Merit order load (L)
location A

Merit order generated
energy (G) location B

Merit order load (L)
location B

Injection = 40 = 140 (G) − 100 (L)     Withdrawal = 40 = 110 (L) − 70 (G)

Cap=40 MW

Flow=40 MW

# F i g . 3

17

Price
(€/MWh)

80

55

40

25
20

**1 Hour period**

Merit order generated
energy (G) location A and B

Merit order load (L)
location A and B

50   80   110  **150**  200

**total quantity**

Volume
(MWh)

Withdrawal = 20 = 70 (L) – 50 (G)          Injection = 20 = 100 (G) – 80 (L)

( A )————————————Cap=50 MW————————————( B )

Flow=20 MW

# Fig. 4

Price
(€/MWh)

80

60

40

25
20

**1 Hour period**

Merit order generated
energy (G) location A and B

Volume    100         200         300
(MWh)

Injection = 0 = 100 (G) – 100 (L)          Withdrawal = 0 = 100 (L) – 100 (G)

( A )————————————Cap=60 MW————————————( B )

Flow=0 MW

# Fig. 5

*Fig. 6*

*Fig. 7*

**European Patent Office**

**EUROPEAN SEARCH REPORT**

Application Number

EP 05 10 0130

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GONZALEZ J J ET AL: "Spanish power exchange market and information system design concepts, and operating experience" 16 May 1999 (1999-05-16), POWER INDUSTRY COMPUTER APPLICATIONS, 1999. PICA '99. PROCEEDINGS OF THE 21ST 1999 IEEE INTERNATIONAL CONFERENCE SANTA CLARA, CA, USA 16-21 MAY 1999, PISCATAWAY, NJ, USA,IEEE, US, PAGE(S) 245-252 , XP010342466 ISBN: 0-7803-5478-8 * the whole document * | 7 | G06F17/60 H02J3/00 |
| A | US 2004/019573 A1 (PELJTO HASO) 29 January 2004 (2004-01-29) * the whole document * | | |
| A | US 2003/041002 A1 (HAO SHANGYOU ET AL) 27 February 2003 (2003-02-27) * paragraph [0033] - paragraph [0076] * | | |
| A | SINGH H ET AL: "Power auctions and network constraints" 7 January 1997 (1997-01-07), SYSTEM SCIENCES, 1997, PROCEEDINGS OF THE THIRTIETH HWAII INTERNATIONAL CONFERENCE ON WAILEA, HI, USA 7-10 JAN. 1997, LOS ALAMITOS, CA, USA,IEEE COMPUT. SOC, US, PAGE(S) 608-614 , XP010271782 ISBN: 0-8186-7743-0 * the whole document * | | TECHNICAL FIELDS SEARCHED (Int.Cl.7) G06F H02J |

-/--

The present search report has been drawn up for all claims

| Place of search | Date of completion of the search | Examiner |
|---|---|---|
| Munich | 25 May 2005 | Lorenzo Feijoo, S |

**European Patent Office**

## EUROPEAN SEARCH REPORT

Application Number

EP 05 10 0130

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WEI-JEN LEE ET AL: "Power system deregulation and smd - status and future projections" 2 May 2004 (2004-05-02), INDUSTRIAL AND COMMERCIAL POWER SYSTEMS TECHNICAL CONFERENCE, 2004 IEEE CLEARWATER BEACH, FLORIDA, USA MAY 2-6, 2004, PISCATAWAY, NJ, USA,IEEE, PAGE(S) 19-26 , XP010708762 ISBN: 0-7803-8419-9 * the whole document * | | |
| P,A | O'NEILL R ET AL: "On Market Clearing Prices Higher than the Highest Bid and Other Almost Paranormal Phenomena" THE ELECTRICITY JOURNAL, ELSEVIER, vol. 18, no. 2, March 2005 (2005-03), pages 19-27, XP004782425 ISSN: 1040-6190 * the whole document * | | |

TECHNICAL FIELDS SEARCHED (Int.Cl.7)

The present search report has been drawn up for all claims

| Place of search | Date of completion of the search | Examiner |
|---|---|---|
| Munich | 25 May 2005 | Lorenzo Feijoo, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 05 10 0130

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2005

| Patent document cited in search report | Publication date | Patent family member(s) | Publication date |
|---|---|---|---|
| US 2004019573 A1 | 29-01-2004 | US 2004024685 A1<br>US 2003225661 A1<br>US 2003225676 A1 | 05-02-2004<br>04-12-2003<br>04-12-2003 |
| US 2003041002 A1 | 27-02-2003 | NONE | |

EPO FORM P0459

For more details about this annex : see Official Journal of the European Patent Office, No. 12/82